(19) Europäisches Patentamt
European Patent Office
Office européen des brevets

(11) **EP 2 308 309 B1**

(12) **EUROPEAN PATENT SPECIFICATION**

(45) Date of publication and mention
of the grant of the patent:
**31.07.2013 Bulletin 2013/31**

(51) Int Cl.:
*A01N 57/20* (2006.01)    *A01N 39/02* (2006.01)
*A01N 39/04* (2006.01)

(21) Application number: **10189235.4**

(22) Date of filing: **26.06.2008**

(54) **Synergistic herbicidal composition containing a substituted phenoxy alkanoic acid derivative and a glyphosate derivative**

Synergistische herbizide Zusammensetzung, die ein substituirtes Phenoxyalkansäurederivat und ein Glyphosate-Derivat enthält

Composition herbicide synergique contenant un dérivé de l'acide phénoxy alcanoique substitué et un dérivé de glyphosate

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.06.2007 US 937788 P**

(43) Date of publication of application:
**13.04.2011 Bulletin 2011/15**

(62) Document number(s) of the earlier application(s) in accordance with Art. 76 EPC:
**08771973.8 / 2 170 079**

(73) Proprietor: **Dow AgroSciences, LLC Indianapolis, Indiana 46268-1054 (US)**

(72) Inventors:
• **Haack, Alan**
  **Roseville, CA 95661 (US)**
• **Olson, Brian**
  **Geneva, NY 14456 (US)**
• **Schmitzer, Paul**
  **Indianapolis, IN 46250 (US)**

(74) Representative: **Dey, Michael**
  **Weickmann & Weickmann**
  **Patentanwälte**
  **Postfach 860820**
  **81635 München (DE)**

(56) References cited:
**WO-A-03/090535    WO-A-2005/087007**

• **HARTZLER B, OWEN M: "Horseweed-A weed on the rise", INTEGRATED CROP MANAGEMENT, [Online] 24 April 2006 (2006-04-24), XP002502425, Retrieved from the Internet: URL:http://www.ipm.iastate.edu/ipm/icm/2006/4-24/horseweed.html> [retrieved on 2008-11-03]**

**Description**

This invention concerns a synergistic herbicidal composition containing (a) a substituted phenoxy alkanoic acid derivative and (b) a glyphosate derivative. More particularly, the invention concerns a synergistic herbicidal composition containing (a) 2,4-dichlorophenoxy propionic acid (dichlorprop)potassium salt and (b) glyphosate isopropylamine salt.

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.

WO 03/090535 A1 discloses a plant growth regulating composition for improving fruit quality, which composition comprises (a) a natural-type abscisic acid, (b) dichlorprop, and optionally (c) at least one plant growth regulator selected from the group consisting of glyphosate, jasmonic acid, methyl jasmonate and ethephone, in addition to general inert auxiliaries.

WO 2005/087007 A1 discloses a herbicidal composition for controlling the growth and proliferation of unwanted plants, which herbicidal composition comprises (a) glyphosate or a herbicidal derivative thereof, (b) at least one auxin herbicide selected from the group consisting of 2,4-D, 2,4-DB, dichlorprop, MCPA, MCPB, mecoprop, dicamba, picloram, quinclorac and agriculturally acceptable salts or esters thereof; and (c) at least one surfactant.

Hartzler et al. (Integrated Crop Management (2006), 496, 97) is conceded with the problem of glyphosate tolerance in horseweed, which tolerance increases once bolting of the plant initiates. In order to overcome this problem, the publication proposes administering a herbicidal mixture comprising 2,4-D and glyphosate to the plant for improving consistency of control in fields where stem elongation has occurred at the time of herbicide application.

In some cases, herbicidal active ingredients have been shown to be more effective in combination than when applied individually and this is referred to as "synergism." As described in the Herbicide Handbook of the Weed Science Society of America, Seventh Edition, 1994, p. 318, "'synergism' [is] an interaction of two or more factors such that the effect when combined is greater than the predicted effect based on the response of each factor applied separately." The present invention is based on the discovery that substituted phenoxy alkanoic acid derivatives and glyphosate derivatives, already known individually for their herbicidal efficacy, display a synergistic effect when applied in combination.

The herbicidal compounds forming the synergistic composition of this disclosure are independently known in the art for their effects on plant growth.

For example, 2,4-D, 2,4-dichlorophenoxy acetic acid, is a selective systemic herbicide used to control annual and perennial broad-leaved weeds in various crops as well as in non-crop land, including areas adjacent to water. It is commercially available, for example, as an ester such as Esteron™ herbicide from Dow AgroSciences and as a salt such as DMA-4™ herbicide from Dow AgroSciences. Dichlorprop, 2,4-dichlorophenoxy propionic acid, is a selective systemic herbicide used to control annual and perennial broad-leaved weeds in various crops as well as in non-crop land. It is commercially available, for example, as a salt such as Dicopur™ DP herbicide or Duplosan™ DP herbicide from Nufarm.

Glyphosate, N-(phophonomethyl)glycine, is a non-selective systemic herbicide used to control annual and perennial grasses and broad-leaved weeds, particularly in crops that have been genetically modified to be tolerant of glyphosate. It is commercially available, for example, as Roundup™ herbicide from Monsanto or Glyphomax Plus™ herbicide from Dow AgroSciences.

The present invention concerns a synergistic herbicidal mixture comprising (a) dichlorprop potassium salt, and (b) glyphosate isopropylamine salt as active ingredients, wherein the concentration of the active ingredients in the herbicidal mixture is 0.001 to 98% by weight.

The compositions may also contain an agriculturally acceptable adjuvant or carrier.

The present invention also concerns a method of controlling the growth of undesirable vegetation, particularly in crops that are tolerant, either naturally or through genetic modification, to the active herbicides of the synergistic mixture.

The species spectrums of the compounds of the synergistic mixture, i.e., the weed species which the respective compounds control, are broad and highly complimentary. While glyphosate is a non-selective herbicide, resistance to glyphosate by several weed species, for example, horseweed (*Conyza canadensis,* ERICA), has been well documented. The synergistic mixture of 2,4-D or dichlorprop and glyphosate is particularly effective at controlling these glyphosate resistant weeds. Other weeds which the mixture of 2,4-D or dichlorprop and glyphosate synergistically control include ivyleaf morningglory (*Ipomoea hederacea*; IPOHE), Canada thistle (*Cirsium arvense;* CIRAR), prickly sida (*Sida spinosa*; SIDSP), velvetleaf (*Abutilon theophrasti*; ABUTH), common ragweed (*Ambrosia artemesifolia;* AMBEL), spiderwort (*Commelina benghalensis;* COMBE), hemp sesbania (*Sesbania exaltata;* SEBEX), field bindweed (*Polygonum convolvulus;* POLCO), and common waterhemp (*Amaranthus rudis*; AMATA).

The term herbicide is used herein to mean an active ingredient that kills, controls or otherwise adversely modifies the growth of plants. An herbicidally effective or vegetation controlling amount is an amount of active ingredient which causes an adversely modifying effect and includes deviations from natural development, killing, regulation, desiccation, retardation, and the like. The terms plants and vegetation include germinating seeds, emerging seedlings and established vegetation.

Herbicidal activity is exhibited by the compounds of the synergistic mixture when they are applied directly to the plant or to the locus of the plant at any stage of growth or before planting or emergence. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted as is known in the art to promote non-selective or selective herbicidal action. Generally, it is preferred to apply the composition of the present invention postemergence to relatively immature undesirable vegetation to achieve the maximum control of weeds.

The substituted phenoxy alkanoic acid derivative contains an asymmetric carbon atom and is capable of existing as a racemic mixture such as dichlorprop or as an individual enantiomer or an enriched enantiomeric mixture such as dichlorprop-P

By substituted phenoxy alkanoic acid derivatives and glyphosate derivatives is meant the acids themselves and their agriculturally acceptable esters and salts.

Suitable salts include those derived from alkali or alkaline earth metals and those derived from ammonia and amines. Preferred cations include sodium, potassium, magnesium, and aminium cations of the formula:

$$R_1R_2R_3NH^+$$

wherein $R_1$, $R_2$, and $R_3$ each, independently represents hydrogen or $C_1$-$C_{12}$ alkyl, $C_3$-$C_{12}$ alkenyl or $C_3$-$C_{12}$ alkynyl, each of which is optionally substituted by one or more hydroxy, $C_1$-$C_4$ alkoxy, $C_1$-$C_4$ alkylthio or phenyl groups, provided that $R_1$, $R_2$, and $R_3$ are sterically compatible. Preferred amine salts are those derived from ammonia, methylamine, dimethylamine, trimethylamine, isopropylamine, monoethanolamine, diethanolamine, triethanolamine, triisopropanolamine, 2-methylthiopropylamine, bisallylamine, 2-butoxyethylamine, morpholine, cyclo-dodecylamine, or benzylamine. Amine salts are often preferred because they are water-soluble and lend themselves to the preparation of desirable aqueous based herbicidal compositions.

Suitable esters include those derived from $C_1$-$C_{12}$ alkyl, $C_3$-$C_{12}$ alkenyl or $C_3$-$C_{12}$ alkynyl alcohols, such as methanol, *iso*-propanol, butanol, 2-ethylhexanol, butoxyethanol, methoxypropanol, allyl alcohol, propargyl alcohol or cyclohexanol.

In the composition of this invention, the weight ratio on an acid equivalent basis of the substituted phenoxy alkanoic acid component to glyphosate component at which the herbicidal effect is synergistic lies within the range of between 5:1 and 1:48. Preferably the weight ratio of the substituted phenoxy alkanoic acid component to the glyphosate component lies within the range of between 3:1 and 1:12 with a weight ratio of between 1:1 and 1:12 being especially preferred.

The rate at which the synergistic composition is applied will depend upon the particular type of weed to be controlled, the degree of control required, and the timing and method of application. In general, the composition of the invention can be applied at an application rate of between 100 grams of acid equivalents per hectare (g ae/ha) and 2000 g ae/ha based on the total amount of active ingredients in the composition. An application rate between 200 g ae/ha and 1000 g ae/ha is preferred. In an especially preferred embodiment of the invention, the dichlorprop component is applied at a rate between 35 g ae/ha and 280 g ae/ha and the glyphosate component is applied at a rate between 100 g ae/ha and 750 g ae/ha.

The components of the synergistic mixture of the present invention can be applied either separately or as part of a multipart herbicidal system.

The synergistic mixture of the present invention can be applied in conjunction with one or more other herbicides to control a wider variety of undesirable vegetation. When used in conjunction with other herbicides, the composition can be formulated with the other herbicide or herbicides, tank mixed with the other herbicide or herbicides or applied sequentially with the other herbicide or herbicides. Some of the herbicides that can be employed in conjunction with the synergistic composition of the present invention include: *amide herbicides* such as allidochlor, beflubutamid, benzadox, benzipram, bromobutide, cafenstrole, CDEA, chlorthiamid, cyprazole, dimethenamid, dimethenamid-P, diphenamid, epronaz, etnipromid, fentrazamide, flupoxam, fomesafen, halosafen, isocarbamid, isoxaben, napropamide, naptalam, pethoxamid, propyzamide, quinonamid and tebutam; *anilide herbicides* such as chloranocryl, cisanilide, clomeprop, cypromid, diflufenican, etobenzanid, fenasulam, flufenacet, flufenican, mefenacet, mefluidide, metamifop, monalide, naproanilide, pentanochlor, picolinafen and propanil; *arylalanine herbicides* such as benzoylprop, flamprop and flamprop-M; *chloroacetanilide herbicides* such as acetochlor, alachlor, butachlor, butenachlor, delachlor, diethatyl, dimethachlor, metazachlor, metolachlor, S-metolachlor, pretilachlor, propachlor, propisochlor, prynachlor, terbuchlor, thenylchlor and xylachlor; *sulfonanilide herbicides* such as benzofluor, perfluidone, pyrimisulfan and profluazol; *sulfonamide herbicides* such as asulam, carbasulam, fenasulam and oryzalin; *antibiotic herbicides* such as bilanafos; *benzoic acid herbicides* such as chloramben, dicamba, 2,3,6-TBA and tricamba; *pyrimidinyloxybenzoic acid herbicides* such as bispyribac and pyriminobac; *pyrimidinylthiobenzoic acid herbicides* such as pyrithiobac; *phthalic acid herbicides* such as chlorthal; *picolinic acid herbicides* such as aminopyralid, clopyralid and picloram; *quinolinecarboxylic acid herbicides* such as quinclorac and quinmerac; *arsenical herbicides* such as cacodylic acid, CMA, DSMA, hexaflurate, MAA, MAMA, MSMA, potassium arsenite and sodium arsenite; *benzoylcyclohexanedione herbicides* such as mesotrione, sulcotrione, tefuryltrione and tembotrione; *benzofuranyl alkylsulfonate herbicides* such as benfuresate and ethofumesate; *carbamate herbicides* such as asulam, carboxazole chlorprocarb, dichlormate, fenasulam, karbutilate and terbucarb; *carbanilate herbicides* such as barban, BCPC, carbasulam, carbetamide, CEPC, chlorbufam, chlorpropham, CPPC, desmedipham, phenisopham, phenmedipham, phenmedipham-ethyl, propham and swep; *cyclohexene oxime herbicides* such as alloxydim, butroxydim, clethodim, cloproxydim, cycloxydim, profoxydim, sethoxydim, tepraloxydim and tralkoxydim; *cyclopropylisoxazole herbicides* such as isoxachlortole and isoxaflutole; *dicarboximide herbicides* such as benzfendizone, cinidon-ethyl, flumezin, flumiclorac, flumioxazin and flumipropyn; *dinitroaniline herbicides* such as benfluralin, butralin, dinitramine, ethalfluralin, fluchloralin, isopropalin, methalpropalin, nitralin, oryzalin, pendimethalin, prodiamine, profluralin and trifluralin; *dinitrophenol herbicides* such as dinofenate, dinoprop, dinosam, dinoseb, dinoterb, DNOC, etinofen and medinoterb; *diphenyl ether herbicides* such as ethoxyfen; *nitrophenyl ether herbicides* such as acifluorfen, aclonifen, bifenox, chlomethoxyfen, chlornitrofen, etnipromid, fluorodifen, fluoroglycofen, fluoronitrofen, fomesafen, furyloxyfen, halosafen, lactofen, nitrofen, nitrofluorfen and oxyfluorfen; *dithiocarbamate herbicides* such as dazomet and metam; *halogenated aliphatic herbicides* such as alorac, chloropon, dalapon, flupropanate, hexachloroacetone, iodomethane, methyl bromide, monochloroacetic acid, SMA and TCA; *imidazolinone herbicides* such as imazamethabenz, imazamox, imazapic, imazapyr, imazaquin and imazethapyr; *inorganic herbicides* such as ammonium sulfamate, borax, calcium chlorate, copper sulfate, ferrous sulfate, potassium azide, potassium cyanate, sodium azide, sodium chlorate and sulfuric acid; *nitrile herbicides* such as bromobonil, bromoxynil, chloroxynil, dichlobenil, iodobonil, ioxynil and pyraclonil; *organophosphorus herbicides* such as amiprofos-methyl, anilofos, bensulide, bilanafos, butamifos, 2,4-DEP, DMPA, EBEP, fosamine, glufosinate and piperophos; *phenoxy herbicides* such as bromofenoxim, clomeprop, 2,4-DEB, 2,4-DEP, difenopenten, disul, erbon, etnipromid, fenteracol and trifopsime; *phenoayacetic herbicides* such as 4-CPA, 3,4-DA, MCPA-thioethyl and 2,4,5-T; *phenoxybutyric herbicides* such as 4-CPB, 3,4-DB, and 2,4,5-TB; *phenoxyprop ionic herbicides* such as cloprop, 4-CPP, 3,4-DP and fenoprop,; *aryloxyphenoxypropionic herbicides* such as chlorazifop, clodinafop, clofop, cyhalofop, diclofop, fenoxaprop, fenoxaprop-P, fenthiaprop, fluazifop, fluazifop-P, haloxyfop, haloxyfop-P, isoxapyrifop, metamifop, propaquizafop, quizalofop, quizalofop-P and trifop; *phenylenediamine herbicides* such as dinitramine and prodiamine; *pyrazolyl herbicides* such as benzofenap, pyrazolynate, pyrasulfotole, pyrazoxyfen, pyroxasulfone and topramezone; *pyrazolylphenyl herbicides* such as fluazolate and pyraflufen; *pyridazine herbicides* such as credazine, pyridafol and pyridate; *pyridazinone herbicides* such as brompyrazon, chloridazon, dimidazon, flufenpyr, metflurazon, norflurazon, oxapyrazon and pydanon; *pyridine herbicides* such as cliodinate, dithiopyr, fluroxypyr, haloxydine, picolinafen, pyriclor, thiazopyr and triclopyr; *pyrimidinediamine herbicides* such as iprymidam and tioclorim; *quaternary arrunonium herbicides* such as cyperquat, diethamquat, difenzoquat, diquat, morfamquat and paraquat; *thiocarbamate herbicides* such as butylate, cycloate, di-allate, EPTC, esprocarb, ethiolate, isopolinate, methiobencarb, molinate, orbencarb, pebulate, prosulfocarb, pyributicarb, sulfallate, thiobencarb, tiocarbazil, tri-allate and vernolate; *thiocarbonate herbicides* such as dimexano, EXD and proxan; *thiourea herbicides* such as methiuron; *triazine herbicides* such as dipropetryn, triaziflam and trihydroxytriazine; *chlorotriazine herbicides* such as atrazine, chlorazine, cyanazine, cyprazine, eglinazine, ipazine, mesoprazine, procyazine, proglinazine, propazine, sebuthylazine, simazine, terbuthylazine and trietazine; *methoxytriazine herbicides* such as atraton, methometon, prometon, secbumeton, simeton and terbumeton; *methylthiotriazine herbicides* such as ametryn, aziprotryne, cyanatryn, desmetryn, dimethametryn, methoprotryne, prometryn, simetryn and terbutryn; *triazinone herbicides* such as ametridione, amibuzin, hexazinone, isomethiozin, metamitron and metribuzin; *triazole herbicides* such as amitrole, cafenstrole, epronaz and flupoxam; *triazolone herbicides* such as amicarbazone, bencarbazone, carfentrazone, flucarbazone, propoxycarbazone, sulfentrazone and thiencarbazone-methyl; *triazolopyrimidine herbicides* such as cloransulam, diclosulam, florasulam, flumetsulam, metosulam, penoxsulam and pyroxsulam; *uracil herbicides* such as butafenacil, bromacil, flupropacil, isocil, lenacil and terbacil; *3-phenyluracils; urea herbicides* such as benzthiazuron, cumyluron, cycluron, dichloralurea, diflufenzopyr, isonoruron, isouron, methabenzthiazuron, monisouron and noruron; *phenylurea herbicides* such as anisuron, buturon, chlorbromuron, chloreturon, chlorotoluron, chloroxuron, daimuron, difenoxuron, dimefuron, diuron, fenuron, fluometuron, fluothiuron, isoproturon, linuron, methiuron, methyldymron, metobenzuron, metobromuron, metoxuron, monolinuron, monuron, neburon, parafluron, phenobenzuron, siduron, tetrafluron and thidiazuron; *pyrimidinylsulfonylurea herbicides* such as amidosulfuron, azimsulfuron, bensulfuron, chlorimuron, cyclosulfamuron, ethoxysulfuron, flazasulfuron, flucetosulfuron, flupyrsulfuron, foramsulfuron, halosulfuron, imazosulfuron, mesosulfuron, nicosulfuron, orthosulfamuron, oxasulfuron, primisulfuron, pyrazosulfuron, rimsulfuron, sulfometuron, sulfosulfuron and trifloxysulfuron; *triazinylsulfonylurea herbicides* such as chlorsulfuron, cinosulfuron, ethametsulfuron, iodosulfuron, metsulfuron, prosulfuron, thifensulfuron, triasulfuron, tribenuron, triflusulfuron and tritosulfuron; *thiadiazolylurea herbicides* such as buthiuron, ethidimuron, tebuthiuron, thiazafluron and thidiazuron; and *unclassified herbicides* such as acrolein, allyl alcohol, aminocyclopyrachlor, azafenidin, benazolin, bentazone, benzobicyclon, buthidazole, calcium cyanamide, cambendichlor, chlorfenac, chlorfenprop, chlorflurazole, chlorflurenol, cinmethylin, clomazone, CPMF, cresol, ortho-dichlorobenzene, dimepiperate, endothal, fluoromidine, fluridone, flurochloridone, flurtamone, fluthiacet, indanofan, methazole, methyl isothiocyanate, nipyraclofen, OCH, oxadiargyl, oxadiazon, oxaziclomefone, pentachlorophenol, pentoxazone, phenylmercury acetate, pinoxaden, prosulfalin, pyribenzoxim, pyriftalid, quinoclamine, rhodethanil, sulglycapin, thidiazimin, tridiphane, trimeturon, tripropindan and tritac.

The synergistic composition of the present invention is particularly useful when used on glyphosate-tolerant, glufosinate-tolerant, 2,4-D-tolerant, dicamba-tolerant or imiazolinone-tolerant crops. It is generally preferred to use the synergistic composition of the present invention in combination with herbicides that are selective for the crop being treated and which complement the spectrum of weeds controlled by these compounds at the application rate employed. It is further generally preferred to apply the synergistic composition of the present invention and other complementary herbicides at the same time, either as a combination formulation or as a tank mix.

The synergistic composition of the present invention can generally be employed in combination with known herbicide safeners, such as benoxacor, benthiocarb, brassinolide, cloquintocet (mexyl), cyometrinil, daimuron, dichlormid, dicyclonon, dimepiperate, disulfoton, fenchlorazole-ethyl, fenclorim, flurazole, fluxofenim, furilazole, isoxadifenethyl, mefenpyr-diethyl, MG 191, MON 4660, naphthalic anhydride (NA), oxabetrinil, R29148 and N-phenyl-sulfonylbenzoic acid amides, to enhance their selectivity.

In practice, it is preferable to use the synergistic composition of the present invention in mixtures containing an herbicidally effective amount of the herbicidal components along with at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water dispersible granules, or wettable powders, or liquids, such as, for example, emulsifiable concentrates, solutions, emulsions or suspensions.

Suitable agricultural adjuvants and carriers that are useful in preparing the herbicidal mixtures of the invention are well known to those skilled in the art.

Liquid carriers that can be employed include water, toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methanol, ethanol, isopropanol, amyl alcohol, ethylene glycol, propylene glycol, glycerine, N-methylpyrrolidinone, *N-N*-dimethylalkylamides, dimethyl sulfoxide and the like. Water is generally the carrier of choice for the dilution of concentrates.

Suitable solid carriers include talc, pyrophyllite clay, silica, attapulgus clay, kaolin clay, kieselguhr, chalk, diatomaceous earth, lime, calcium carbonate, bentonite clay, Fuller's earth, cotton seed hulls, wheat flour, soybean flour, pumice, wood flour, walnut shell flour, lignin, and the like.

It is usually desirable to incorporate one or more surface-active agents into the compositions of the present invention. Such surface-active agents are advantageously employed in both solid and liquid compositions, especially those designed to be diluted with carrier before application. The surface-active agents can be anionic, cationic or nonionic in character and can be employed as emulsifying agents, wetting agents, suspending agents, or for other purposes. Typical surface-active agents include salts of alkyl sulfates, such as diethanolammonium lauryl sulfate; alkylarylsulfonate salts, such as calcium dodecylbenzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; and salts of mono and dialkyl phosphate esters.

Other adjuvants commonly used in agricultural compositions include compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

The concentration of the active ingredients in the synergistic composition of the present invention is from 0.001 to 98 percent by weight. Concentrations from 0.01 to 90 percent by weight are often employed. In compositions designed to be employed as concentrates, the active ingredients are generally present in a concentration from 5 to 98 weight percent, preferably 10 to 90 weight percent. Such compositions are typically diluted with an inert carrier, such as water, before application. The diluted compositions usually applied to weeds or the locus of weeds generally contain 0.0001 to 1 weight percent active ingredient and preferably contain 0.001 to 0.05 weight percent.

The present compositions can be applied to weeds or their locus by the use of conventional ground or aerial dusters, sprayers, and granule applicators, by addition to irrigation water, and by other conventional means known to those skilled in the art.

The following examples illustrate the present invention.

Examples

2,4-D (dimethylamine salt), dichlorprop (potassium salt) and Glyphomax XRT® herbicide (isopropylamine salt) alone and in combinations were applied to the foliage of rapidly growing plant material utilizing a track sprayer calibrated to deliver an application volume of 187 L/ha. Treated plant material was maintained in a greenhouse that provided a 16-hr photoperiod, supplemented with metal halide-generated light, set to provide a minimum of 500 $\mu$molm$^{-2}$s$^{-1}$. The greenhouse was maintained at a temperature of 26 to 28 °C and a relative humidity of 50 to 70%. Assessment of herbicidal activity was performed visually 14 to 21 days after application.

The expected growth reduction of plant species from the combination of herbicides was calculated utilizing the Colby equation:

$$\text{Expected growth reduction (E)} = X+Y - (X*Y/100)$$

where X is % of growth reduction of a weed at a given concentration of a herbicide (or herbicide formulation) and Y is the % growth reduction of the same species and size weed at a given concentration of an independent herbicide (or herbicide formulation).

Tables I, II, III and IV contain the data for expected and actual herbicidal growth reduction caused by relevant individual herbicides and combinations of these herbicides on agronomically important weeds.

TABLE I: Herbicidal effects of Glyphomax XRT®, 2,4-D and combinations of the two herbicides on select broadleaf weeds (not according to the invention).

| Species | Glyphomax XRT Rate | 2,4-D Rate | Expected Injury* | Actual Injury |
|---|---|---|---|---|
| | (g ae/ha) | (g ae/ha) | (% growth reduction) | (% growth reduction) |
| IPOHE | 210 | 0 | -- | 43 |
| | 0 | 70 | -- | 17 |
| | 210 | 70 | 53 | 93 |
| CIRAR | 210 | 0 | -- | 25 |
| | 0 | 280 | -- | 38 |
| | 210 | 280 | 54 | 95 |
| SIDSP | 420 | 0 | -- | 33 |
| | 0 | 140 | -- | 17 |
| | 420 | 140 | 44 | 72 |
| ABUTH | 210 | 0 | -- | 17 |
| | 0 | 280 | -- | 28 |
| | 210 | 280 | 40 | 60 |
| AMBEL | 105 | 0 | -- | 12 |
| | 0 | 140 | -- | 61 |
| | 105 | 140 | 66 | 96 |
| COMBE | 560 | 0 | -- | 38 |
| | 0 | 140 | -- | 48 |
| | 560 | 140 | 68 | 95 |

(continued)

| Species | Glyphomax XRT Rate | 2,4-D Rate | Expected Injury* | Actual Injury |
|---|---|---|---|---|
| | (g ae/ha) | (g ae/ha) | (% growth reduction) | (% growth reduction) |
| SEBEX | 210 | 0 | -- | 13 |
| | 0 | 280 | -- | 37 |
| | 210 | 280 | 45 | 93 |
| POLCO | 420 | 0 | -- | 18 |
| | 0 | 280 | -- | 32 |
| | 420 | 280 | 44 | 83 |
| AMATA | 210 | 0 | -- | 8 |
| | 0 | 280 | -- | 53 |
| | 210 | 280 | 57 | 99 |
| *Expected injury values were calculated using Colby's equation. | | | | |

Table II: Herbicidal effects of Glyphomax XRT®, 2,4-D and combinations of the two herbicides on glyphosate-susceptible and glyphosate-resistant *Conyza canadensis* (ERICA) (not according to the invention).

| Species | Glyphomax XRT Rate | 2,4-D Rate | Expected Injury* | Actual Injury |
|---|---|---|---|---|
| | (g ae/ha) | (g ae/ha) | (% growth reduction) | (% growth reduction) |
| ERICA Glyphosate Susceptible | 420 | 0 | -- | 50 |
| | 0 | 35 | -- | 47 |
| | 420 | 35 | 74 | 86 |
| ERICA Glyphosate Resistant | 420 | 0 | -- | 12 |
| | 0 | 70 | -- | 38 |
| | 420 | 70 | 45 | 99 |
| *Expected injury values were calculated using Colby's equation. | | | | |

Table III: Herbicidal effects of Glyphomax XRT®, dichlorprop and combinations of the two herbicides on glyphosate-susceptible and glyphosate-resistant *Conyza canadensis* (ERICA).

| Species | Glyphomax XRT Rate | Dichlorprop Rate | Expected Injury* | Actual Injury |
|---|---|---|---|---|
| | (g ae/ha) | (g ae/ha) | (% growth reduction) | (% growth reduction) |
| ERICA Glyphosate Susceptible | 420 | 0 | -- | 50 |
| | 0 | 210 | -- | 43 |
| | 420 | 210 | 72 | 92 |
| ERICA Glyphosate Resistant | 420 | 0 | -- | 12 |
| | 0 | 210 | -- | 43 |
| | 420 | 210 | 50 | 93 |
| *Expected injury values were calculated using Colby's equation. | | | | |

Table IV: Herbicidal effects of Glyphomax XRT®, dichlorprop and combinations of the two herbicides on select broadleaf weeds.

| Species | Glyphomax XRT Rate | Dichlorprop Rate | Expected Injury* | Actual Injury |
|---|---|---|---|---|
| | (g ae/ha) | (g ae/ha) | (% growth reduction) | (% growth reduction) |
| IPOHE | 105 | 0 | -- | 12 |
| | 0 | 70 | -- | 68 |
| | 105 | 70 | 72 | 92 |
| CIRAR | 210 | 0 | -- | 25 |
| | 0 | 70 | -- | 48 |
| | 210 | 70 | 61 | 85 |
| ABUTH | 210 | 0 | -- | 17 |
| | 0 | 70 | -- | 33 |
| | 210 | 70 | 44 | 58 |
| AMBEL | 105 | 0 | -- | 12 |
| | 0 | 280 | -- | 58 |
| | 105 | 280 | 63 | 82 |
| COMBE | 560 | 0 | -- | 38 |
| | 0 | 70 | -- | 80 |
| | 560 | 70 | 88 | 96 |
| SEBEX | 210 | 0 | -- | 13 |
| | 0 | 140 | -- | 38 |
| | 210 | 140 | 46 | 75 |
| POLCO | 420 | 0 | -- | 18 |
| | 0 | 140 | -- | 38 |
| | 420 | 140 | 49 | 87 |
| AMATA | 210 | 0 | -- | 8 |
| | 0 | 280 | -- | 48 |
| | 210 | 280 | 52 | 98 |
| *Expected injury values were calculated using Colby's equation. | | | | |

A field study was conducted at Church Hill, MD where glyphosate-resistant horseweed (ERICA, *Conyza canadensis*) had been observed for 2-3 years prior to the start of this study. The study design was a split-plot with 4 replications per treatment and each plot was 3.048 M wide and 9.144 M long. The environmental conditions at the time of application were as follows: air temperature, 22 °C; wind speed, 6 kph; wind direction, south; releative humidity, 85%; cloud cover, 80%; target foliage moisture, none; soil moisture, moist; soil temperature at 5 cm depth, 21 °C. The treatments were applied using a backpack $CO_2$ sprayer, with six XR8003 flat fan nozzles spaced 46 cm apart (boom length: 2.76 M) and held 40 cm above the plant canopy. The sprayer was operated at 103 kPa and 4,8 kilometers per hour to deliver 187 L of water per hectare. At the time of applications the glyphosate-resistant horseweed were 30 - 38 cm tall and there were between 10 and 20 plants per square meter ($m^2$). The percent visual control of glyphosate-resistant horseweed was rated over the entire plot (27.87 $m^2$) 29 days after application.. In each plot between 278 and 557 glyphosate-resistant horseweed plants were rated, collectively, for percent visual control. The results are tabulated in Table V.

Table V: Herbicidal effects of Glyphomax Plus®, 2,4-D and combinations of the two herbicides on glyphosate-resistant *Conyza canadensis* (ERICA) (not according to the invention).

| Glyphomax Plus Rate (g ae/ha) | 2,4-D Rate (g ae/ha) | Expected Injury* (% growth reduction) | Actual Injury (% growth reduction) |
|---|---|---|---|
| 280 | 0 | -- | 2.5 |
| 0 | 280 | -- | 12.5 |
| 280 | 280 | 14.7 | 35.0 |
| 280 | 0 | -- | 2.5 |
| 0 | 560 | -- | 23.0 |
| 280 | 560 | 24.9 | 43.8 |
| 280 | 0 | -- | 2.5 |
| 0 | 1120 | -- | 36.3 |
| 280 | 1120 | 37.9 | 57.5 |
| 560 | 0 | -- | 8.8 |
| 0 | 280 | -- | 12.5 |
| 560 | 280 | 20.2 | 61.3 |
| 560 | 0 | -- | 8.8 |
| 0 | 560 | -- | 23.0 |
| 560 | 560 | 29.8 | 68.8 |
| 560 | 0 | -- | 8.8 |
| 0 | 1120 | -- | 36.3 |
| 560 | 1120 | 41.9 | 86.8 |
| 840 | 0 | -- | 13.8 |
| 0 | 280 | -- | 12.5 |
| 840 | 280 | 24.6 | 60.0 |
| 840 | 0 | -- | 13.8 |
| 0 | 560 | -- | 23.0 |
| 840 | 560 | 33.6 | 87.5 |
| 840 | 0 | -- | 13.8 |
| 0 | 1120 | -- | 36.3 |
| 840 | 1120 | 45.1 | 74.5 |
| *Expected injury values were calculated using Colby's equation. | | | |

**Claims**

1. An herbicidal mixture comprising (a) dichlorprop potassium salt, and (b) glyphosate isopropylamine salt as active ingredients, wherein the concentration of the active ingredients in the herbicidal mixture is 0.001 to 98% by weight.

2. The mixture of claim 1, wherein the weight ratio on an acid equivalent basis of the dichlorprop potassium salt to the glyphosate isopropylamine salt is between 5:1 and 1:48.

3. The mixture of claim 1 or 2, wherein the weight ratio on an acid equivalent basis of the dichlorprop potassium salt to the glyphosate isopropylamine salt is between 3:1 and 1:12.

4. An herbicidal composition comprising the herbicidal mixture of any one of claims 1 to 3 and an agriculturally acceptable adjuvant or carrier.

5. A method of controlling undesirable vegetation, which comprises contacting the vegetation or the locus thereof with or applying to the soil to prevent the emergence of vegetation the herbicidal mixture of claims 1-3.

6. The method of claim 5, wherein the undesirable vegetation is glyphosate-resistant horseweed.


**Patentansprüche**

1. Herbizides Gemisch, umfassend (a) Dichlorprop-Kaliumsalz und (b) Glyphosat-Isopropylaminsalz als Wirkstoffe, worin die Konzentration des Wirkstoffs in dem herbiziden Gemisch 0,001 bis 98 Gewichts-% ist.

2. Gemisch nach Anspruch 1, worin das Gewichtsverhältnis auf einer Säureäquivalentbasis des Dichlorprop-Kaliumsalzes zu dem Glyphosat-Isopropylaminsalz zwischen 5:1 und 1:48 ist.

3. Gemisch nach Anspruch 1 oder 2, worin das Gewichtsverhältnis auf einer Säureäquivalentbasis des Dichlorprop-Kaliumsalzes zu dem Glyphosat-Isopropylaminsalz zwischen 3:1 und 1:12 ist.

4. Herbizide Zusammensetzung, umfassend das herbizide Gemisch nach einem der Ansprüche 1 bis 3 und einen landwirtschaftlich verträglichen Zusatzstoff oder Träger.

5. Verfahren zum bekämpfen einer unerwünschten Vegetation, umfassend das In-Kontakt-bringen der Vegetation oder des Orts davon mit dem herbiziden Gemisch nach den Ansprüchen 1-3 oder Anwenden des herbiziden Gemischs nach den Ansprüchen 1-3 auf den Boden zum Verhindern des Auflaufens von Vegetation.

6. Verfahren nach Anspruch 5, worin die unerwünschte Vegetation Glyphosat-resistentes kanadisches Berufkraut ist.


**Revendications**

1. Mélange herbicide comprenant, comme ingrédients actifs,

   a) du sel de potassium de dichlorprop,
   b) et du sel d'isopropylamine de glyphosate,

   dans lequel mélange herbicide la concentration des ingrédients actifs vaut de 0,001 à 98 % en poids.

2. Mélange conforme à la revendication 1, dans lequel le rapport pondéral, en équivalents d'acide, du sel de potassium de dichlorprop au sel d'isopropylamine de glyphosate vaut entre 5/1 et 1/48.

3. Mélange conforme à la revendication 1 ou 2, dans lequel le rapport pondéral, en équivalents d'acide, du sel de potassium de dichlorprop au sel d'isopropylamine de glyphosate vaut entre 3/1 et 1/12.

4. Composition herbicide comprenant un mélange herbicide conforme à l'une des revendications 1 à 3, ainsi qu'un adjuvant ou un véhicule acceptable en agriculture.

5. Procédé de lutte contre un végétal indésirable, qui comporte le fait de mettre ce végétal ou l'endroit où il pousse en contact avec un mélange herbicide conforme à l'une des revendications 1 à 3, ou le fait d'appliquer sur le sol un tel mélange, de manière à empêcher ce végétal de lever.

6. Procédé conforme à la revendication 5, dans lequel le végétal indésirable est de la vergerette du Canada résistante au glyphosate.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03090535 A1

- WO 2005087007 A1

**Non-patent literature cited in the description**

- Herbicide Handbook. Weed Science Society of America, 1994, 318